# EUROPÄISCHE PATENTSCHRIFT

(11) **EP 2 941 317 B1**
(45) Veröffentlichungstag und Bekanntmachung des Hinweises auf die Patenterteilung: **25.12.2019**
(21) Anmeldenummer: 14700054.1
(22) Anmeldetag: 03.01.2014
(51) Int. Cl.: B01J 31/04, C08G 18/24

(54) **VERWENDUNG VON ZINNSALZEN DER NEODEKANSÄURE BEI DER HERSTELLUNG VON POLYURETHANSCHÄUMEN**
USE OF TIN SALTS OF NEODECANOIC ACID IN THE PRODUCTION OF POLYURETHANE FOAMS
UTILISATION DE SELS D'ÉTAIN DE L'ACIDE NÉODÉCANOÏQUE LORS DE LA PRÉPARATION DE MOUSSE DE POLYURÉTHANES

(30) Priorität: 04.01.2013 EP 13150254
(43) Veröffentlichungstag der Anmeldung: 11.11.2015
(73) Patentinhaber: Evonik Operations GmbH, 45128 Essen (DE)
(72) Erfinder: SCHMITZ, Sarah, 47198 Duisburg (DE); HUBEL, Roland, 45136 Essen (DE); GÜNTHER, Thomas, 41464 Neuss (DE)
(74) Vertreter: Evonik Patent Association
(86) Internationale Anmeldenummer: PCT/EP2014/050041
(87) Internationale Veröffentlichungsnummer: WO 2014/106642

(56) Entgegenhaltungen:
- EP-A2- 2 256 141
- JP-A- 2007 308 656
- JP-A- 2010 084 128

## Beschreibung

Die Erfindung betrifft die Verwendung von Zinnsalz der Neodekansäure und deren Lösungen bei der Herstellung von Polyurethanschäumen.

Polyurethansysteme sind z. B. Polyurethanbeschichtungen, Polyurethanadhäsive, Polyurethandichtmittel, Polyurethanelastomere oder Polyurethanschäume/ -schaumstoffe.

Polyurethanschaumstoffe finden aufgrund ihrer hervorragenden mechanischen und physikalischen Eigenschaften in den verschiedensten Bereichen Verwendung. Einen besonders wichtigen Markt für verschiedenste Typen von PUR-Schäumen, wie konventionelle Weichschäume auf Ether- und Esterpolyolbasis, Kaltschäume (häufig auch als HR-Schäume bezeichnet), Hartschäume, Integralschäume und mikrozellulare Schäume, sowie Schäume deren Eigenschaften zwischen diesen Klassifizierungen liegen, wie z. B. halbharte Systeme, stellt die Automobil- und die Möbelindustrie dar. Es werden z. B. Hartschäume als Dachhimmel, Esterschäume zur Innenverkleidung der Türen sowie für ausgestanzte Sonnenblenden, Kalt- und Weichschäume für Sitzsysteme und Matratzen verwendet.

Für einkomponentige feuchtigkeitsreaktive Polyurethanzusammensetzungen geeignete Katalysatoren enthalten meist Zinnverbindungen, wie Zinncarboxylate, insbesondere Zinnoctoat (entspricht Zinn-2-Ethylhexanoat), vielfach kombiniert mit tertiären Aminen.

So wird die Verwendung von Zinnoctoat bei der Herstellung von PUR-Weichschäumen auf der Basis von Polyetherolen beispielsweise in Steve Lee, Huntsman Polyurethanes, The Polyurethanes Book, Verlag Wiley, S. 140, 143-144 und Ron Herrington, Flexible Polyurethane Foams, Dow Chemical, S. 2.30 beschrieben. Das Zinnoctoat dient als Katalysator der Reaktion von Isocyanaten mit Polyolen (auch als Gelkatalysator bezeichnet) über einen komplexen Übergangszustand. Während der Herstellung des Schaumes hydrolysiert das Zinnoctoat und setzt sowohl das Salz der 2-Ethylhexansäure, als auch die Säure an sich, frei. Die Zersetzung ist zwar erwünscht, weil auf diese Weise die Rückreaktion der Urethanbindung zu den Edukten unterbunden ist, sollte nach Möglichkeit jedoch nicht zur Freisetzung eventuell toxikologisch bedenklicher Substanzen führen. Auch in der Patentliteratur sind zahlreiche Anmeldungen zu finden, die die Verwendung von besagtem Zinnoctoat beschreiben, so z. B. in BE 779607, GB

1432281, GB 1422056, GB 1382538, GB 1012653, GB 982280 genannt. In diesen Schriften werden als bevorzugte Katalysatorsysteme solche eingesetzt, die Zinnoctoat aufweisen.

Solche Zinn-Katalysatoren geraten jedoch in neuerer Zeit seitens der Anwender immer mehr unter Druck aufgrund toxikologischer Bedenken bezüglich der zu ihrer Herstellung verwendeten Edukte, insbesondere der Liganden. Daher besteht ein zunehmender Bedarf an toxikologisch unbedenklicheren Alternativen.

Zur Erfüllung der sich in den letzten Jahren deutlich verschärfenden Anforderungen an die Automobil- und Möbelindustrie und deren Schaumstoffzulieferer bezüglich Emissions- und Toxizitätsspezifikationen wurden bereits Katalysatorsysteme entwickelt, die weniger toxische, in den Schaum einpolymerisierbare Liganden enthalten. Solche Systeme werden beispielsweise in EP 1013704 beschrieben. Der Nachteil dieser Systeme besteht in deren hohen Einsatzmengen und den damit verbundenen Kosten aufgrund des niedrigen Zinngehalts und der starken Abschirmung des aktiven Zinns durch die Liganden. Diese Systeme stellten bis dato eine der wenigen Alternativen zu dem weitverbreiteten Zinnoctoat-Katalysatorsystem (Zinn(II)-Salz der 2-Ethylhexansäure) bzw. Organozinnverbindungen, wie Dibutylzinndilaurat dar. Letztgenannte Systeme sind im Hinblick auf die Toxizität der emittierenden Substanzen kritisch zu betrachten. Die beispielsweise während und nach der Verschäumung freiwerdende 2-Ethylhexansäure gibt wegen möglicher fruchtschädigender (entwicklungsschädigender) Wirkungen beim Menschen (R 63) Anlass zur Besorgnis.

In EP 2 289 960 wird die Verwendung von Zinnsalzen verzweigter Carbonsäuren beschrieben, die nicht ausschließlich eine einzelne Ethyl- oder n-Propylverzweigung aufweist. Die Verwendung der Salze dieser Säuren hatte den Vorteil, dass Emissionen der Säurekomponente deutlich reduziert werden konnte. Die erhaltenen Schäume zeichneten sich durch eine hohe Offenzelligkeit im Vergleich zu Zinnoctoat und Zinnpropylheptanoat aus.

EP 2 256 141 A2 beschreibt in einem Vergleichsbeispiel eine Polyurethanrezeptur, die 0,19 Gewichtsteile des Sn(II)-Salzes der Neodekansäure als Katalysator enthält. JP 2007 308656 A beschreibt Zinnneodekanoat als Polyurethankatalysator, der allein oder in Kombination mit weiteren Zinn- oder Bismuthcarboxylaten eingesetzt werden kann. Auch aus JP 2010 084128 A ist die Verwendung von Zinnneodekanoat als Polyurethankatalysator bekannt.

Aufgabe der vorliegenden Erfindung war die Bereitstellung eines Katalysatorsystems, welches zur Herstellung von geschlossenzelligen Schäumen geeignet ist und einen oder mehrere der vorgenannten Nachteile nicht aufweist.

Es werden hier Katalysatorsysteme beschrieben, geeignet zur Katalyse der Herstellung von Polyurethansystemen, welche dadurch gekennzeichnet sind, dass die Katalysatorsysteme zumindest ein Zinnsalz der Neodekansäure enthalten. Beschrieben werden die Verwendung solcher Katalysatorsysteme bei der Herstellung von Polyurethansystemen sowie entsprechende Polyurethansysteme, insbesondere Polyurethanschäume und deren Verwendung.

Der Gegenstand der Erfindung ist ein Verfahren zur Herstellung von Polyurethanschäumen wie in Anspruch 1 angegeben.

Das erfindungsgemäß einzusetzende Katalysatorsystem hat den Vorteil, dass bereits mit einer vergleichbaren molaren Menge bezogen auf Zinn im Zinnsalz (verglichen z. B. mit Zinnoktoat oder Zinnisononanoat) wesentlich geschlossenzelligere Schäume hergestellt werden können.

Ein weiterer Vorteil besteht darin, dass für die Herstellung von offenzelligen Schäumen vergleichbarer Dichte eine deutlich geringere Menge an Zinnsalz notwendig ist als bei der Verwendung der aus dem Stand der Technik bekannten Zinnisononanoat bzw. Zinnoktanoat-Katalysatoren. Dieser Vorteil könnte seine Ursache in einem anderen Vorteil des Zinnneodekanoats haben, nämlich der überraschend hohen Aktivität im Vergleich zu Zinnisononanoat und Zinnoktanoat bei relativ niedrigem Zinngehalt.

Das erfindungsgemäß einzusetzende Katalysatorsystem kann sowohl zur Herstellung von flexiblen Schäumen auf Basis von Ether- und Esterpolyolen als auch von Hartschäumen sowie Schäumen, deren Eigenschaften zwischen diesen Klassifizierungen liegen, wie z.B. halbharte Schäume, eingesetzt werden. Besonders vorteilhaft ist die Verwendung bei der Herstellung von geschlossenzelligen Schäumen, insbesondere von solchen Schäumen, die luft- oder wasserdicht sind. Um diese Eigenschaften zu testen, können beispielsweise der GM (General Motors Engineering Standard GM 6086M) - oder Ford-Test (Ford Laboratory Test Method BO-112 03) angewendet werden. Beide Testmethoden sind ausführlich in Patent US 6,747,068 B2 (Beispiel 61) beschrieben. Unter wasserdicht wird im Rahmen der vorliegenden Erfindung verstanden, dass der Schaum bei 50%iger Verdichtung eine 25 mm Wassersäule für 90 Minuten hält, ohne dass Wasser hindurch dringt (Bestimmt gemäß GM Test wie in US 6,747,068 B2, Beispiel 61 B angegeben). In den Beispielen wird dieser GM-Test zur Untersuchung der Schaumeigenschaften herangezogen.

Die erfindungsgemäß einzusetzenden Katalysatorsysteme, das Verfahren zur Herstellung der Polyurethanschäume, die Polyurethanschäume selbst sowie deren Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören.

Das erfindungsgemäß einzusetzende Katalysatorsystem, welches zur Katalyse der Herstellung von Polyurethanschäumen geeignet ist, zeichnet sich dadurch aus, dass es ein Zinnsalz der Neodekansäure, vorzugsweise das Zinn-II-Salz der Neodekansäure enthält.

Erfindungsgemäß bevorzugte Katalysatorsysteme, sind solche, die keine weiteren Zinnsalze und/oder Zinnverbindungen aufweisen.

Das Katalysatorsystem weist das Zinnsalz in Kombination mit einem oder mehreren organischen Lösungsmitteln auf. Wird das Zinnsalz gelöst bzw. in Kombination mit einem Lösungsmittel eingesetzt, enthält das Katalysatorsystem vorzugsweise ein organisches aprotisches Lösungsmittel. Enthält das Katalysatorsystem ein organisches Lösungsmittel, so ist dieses vorzugsweise ausgewählt aus Glycolen, vorzugsweise Monoethylenglycol (MEG oder EG), 1,3-Propandiol (PDO), 1,4-Butandiol (BDO), Diethylenglycol (DEG), Propylenglycol (PG oder PEG), Dipropylenglycol (DPG), Triethylenglycol, Butyldiglycol (BDG), Neopentylglycol oder 2-Methylpropane-1,3-diol, Polyolen, vorzugsweise Polyester-Polyole, Polyether-Polyole, natural Oil based Polyols (NOPs) oder Glycerin, Estern, vorzugsweise Fettsäureestem, bevorzugt Isopropylmyristat, Mineralölen, Kohlenwasserstoffen, vorzugsweise Mineralöle, Hexan, Pentan, Heptan, Dekan oder Mischungen von gesättigten Kohlenwasserstoffen, wie z. B. Kaydol Produkte der Fa. Sonneborn, Polyethem, vorzugsweise solchen, die einen Anteil an Propylenoxid-Einheiten von mehr als 20 mol-% bezogen auf die Alkylenoxideinheiten im Polyether aufweisen, Polyestem, vorzugsweise Polycarbonaten, Phthalaten, vorzugsweise Dibutylphthalat (DBP), Dioctylphthalat (DNOP), Diethylhexylphthalat (DEHP), Diisononylphthalat (DINP), Dimethylphthalat (DMP), Diethylphthalat (DEP), Cyclohexanoate, vorzugsweise Diisononylcyclohexanoat (DINCH), endverkappten Polyethem, vorzugsweise Dialkyl-Polyether, die als Alkylreste Butyl-/Methyl-, Methyl-/Methyl- oder Butyl-/Butyl-Reste aufweisen, bevorzugt solche, die aus Diol-gestarteten Polyethem erhältlich sind, Olefinen, Lactamen und Lactonen. Wird das Zinnsalz gelöst oder in Kombination mit einem Lösungsmittel eingesetzt, beträgt das Massenverhältnis von Zinnsalz zu Lösungsmittel vorzugsweise von 100 zu 1 bis 1 zu 2, bevorzugt von 50 zu 1 bis 1 zu 1 und besonders bevorzugt von 25 zu 1 bis 2 zu 1.

Neben dem/den Zinnsalz(en) und einem oder mehreren Lösungsmitteln kann das Katalysatorsystem weitere Komponenten, wie z. B. ein oder mehrere tertiäre Amine, ein oder mehrere Silikonstabilisatoren und gegebenenfalls ein oder mehrere Emulgatoren aufweisen. Bevorzugt liegt es jedoch gelöst vor.

Das erfindungsgemäß einzusetzende Katalysatorsystem kann zur Herstellung von jeglichen Polyurethansystemen verwendet werden. Insbesondere wird das erfindungsgemäße Katalysatorsystem in dem erfindungsgemäßen Verfahren zur Herstellung von Polyurethanschäumen eingesetzt.

Das erfindungsgemäße Verfahren zur Herstellung von Polyurethanschäumen zeichnet sich dadurch aus, dass ein erfindungsgemäßes Katalysatorsystem eingesetzt wird nach Maßgabe von Anspruch 1. Das erfindungsgemäße Verfahren wird zur Herstellung von Polyurethanschäumen eingesetzt. Das erfindungsgemäß einzusetzende Katalysatorsystem kann dabei der Reaktionsmischung vorzugsweise vor oder während der Reaktion zugegeben werden, bevorzugt mit Hilfe eines Mischkopfes zudosiert werden.

Wie beschrieben, kann das Katalysatorsystem weitere Bestandteile, wie z. B. Wasser, tertiäres Amin, Silikonstabilisator und gegebenenfalls Emulgator, aufweisen. Eine solche Lösung des Katalysators wird häufig als Aktivatorlösung bezeichnet. Bevorzugt wird das Katalysatorsystem jedoch separat zugegeben.

Alternativ zur direkten Verschäumung kann das Katalysatorsystem auch in verdünnter Form zudosiert werden. Dabei sind wasserfreie Lösungen vorzuziehen, da Zinnsalze nur bedingt hydrolysestabil sind.

Die erfindungsgemäß einzusetzenden Katalysatorsysteme sind als Katalysatoren in den üblichen Formulierungen zur Herstellung von Polyurethanschäumen/-schaumstoffen, enthaltend oder vorzugsweise bestehend aus einem oder mehreren organischen Isocyanaten mit zwei oder mehr Isocyanat-Funktionen, einem oder mehreren Polyolen mit zwei oder mehr gegenüber Isocyanat reaktiven Gruppen, ggf. weiteren Katalysatoren für die Reaktionen Isocyanat-Polyol und/oder Isocyanat-Wasser und/oder die Isocyanat-Trimerisierung, Wasser, optional physikalischen Treibmitteln, optional Flammschutzmitteln und ggf. weiteren Additiven, einsetzbar.

Geeignete Isocyanate im Sinne dieser Erfindung sind vorzugsweise alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch.

Geeignete Polyole im Sinne dieser Erfindung sind vorzugsweise alle organischen Substanzen mit mehreren gegenüber Isocyanaten reaktiven Gruppen, sowie deren Zubereitungen. Bevorzugte Polyole sind alle zur Herstellung von Polyurethansystemen, insbesondere Polyurethanschaumstoffen üblicherweise verwendeten Polyetherpolyole und Polyesterpolyole. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (meist Glycolen). Zudem können auf natürlichen Ölen basierende Polyether (natural oil based polyols, NOPs) eingesetzt werden. Diese Polyole werden aus natürlichen Ölen wie z.B. Soja- oder Palmöl gewonnen und können unmodifiziert oder modifiziert verwendet werden.

Ein geeignetes Verhältnis von Isocyanat und Polyol, ausgedrückt als Index der Formulierung, liegt im Bereich von 10 bis 1000, bevorzugt 40 bis 350. Dieser Index beschreibt das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Geeignete weitere Katalysatoren im Sinne dieser Erfindung sind Substanzen, die die Gelreaktion (Isocyanat-Polyol), die Treibreaktion (Isocyanat-Wasser) oder die Di- bzw. Trimerisierung des Isocyanats katalysieren. Typische Beispiele sind Amine, wie z.B. Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Bismutverbindungen oder - salze und Kaliumsalze wie Kaliumacetat. Vorzugsweise werden als weitere Katalysatoren solche eingesetzt, die keine Zinnverbindungen, insbesondere kein Dibutylzinndilaurat enthalten.

Geeignete Einsatzmengen der weiteren Katalysatoren richten sich nach dem Typ des Katalysators und liegen üblicherweise im Bereich von 0,01 bis 5 pphp (= Gewichtsteile bezogen auf 100 Gewichtsteile Polyol) bzw. 0,1 bis 10 pphp für Kaliumsalze.

In dem erfindungsgemäßen Verfahren beträgt die eingesetzte Menge an Zinnneodekanoat vorzugsweise von 0,02 bis 1 pphp, bevorzugt 0,04 bis 1 pphp, besonders bevorzugt von 0,08 bis 0,9 pphp und besonders bevorzugt 0,09 bis 0,7 pphp.

Geeignete Wasser-Gehalte im Sinne dieser Erfindung hängen davon ab, ob zusätzlich zum Wasser noch physikalische Treibmittel eingesetzt werden oder nicht. Bei rein Wassergetriebenen Schäumen liegen die Werte typischerweise bei 1 bis 20 pphp, werden zusätzlich andere Treibmittel eingesetzt, verringert sich die Einsatzmenge auf üblicherweise 0 oder 0,1 bis 5 pphp. Zur Erlangung hoher Schaumraumgewichte werden weder Wasser noch andere Treibmittel eingesetzt.

Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Sauerstoff-haltige Verbindungen wie Methylformiat und Dimethoxymethan, oder Chlorkohlenwasserstoffe, bevorzugt Dichlormethan und 1,2-Dichlorethan. Des Weiteren eignen sich Ketone (z.B. Aceton) oder Aldehyde (z.B. Methylal) als Treibmittel.

Neben Wasser und ggf. physikalischen Treibmitteln, können auch andere chemische Treibmittel eingesetzt werden, die mit Isocyanaten unter Gasentwicklung reagieren, wie beispielsweise Ameisensäure oder Carbonate.

Geeignete Flammschutzmittel im Sinne dieser Erfindung sind bevorzugt flüssige organische Phosphorverbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Die Verarbeitung der Formulierungen zu Schaumstoffen kann nach allen dem Fachmann geläufigen Verfahren erfolgen, beispielsweise im Handmischverfahren oder bevorzugt mit Hilfe von Hochdruck-Verschäumungsmaschinen. Dabei können diskontinuierliche Verfahren, beispielsweise zur Produktion von Formschäumen, Kühlschränken und Paneelen, oder kontinuierliche Verfahren, beispielsweise bei Dämmplatten, Metallverbundelementen, Blöcken oder bei Sprühverfahren zum Einsatz kommen.

Durch das erfindungsgemäße Verfahren können Polyurethanschäume erhalten werden, die sich dadurch auszeichnen, dass sie zumindest Neodekansäure oder deren Zinnsalz, aufweisen. Vorzugsweise weisen die erfindungsgemäß erhältlichen Polyurethanschäume im Wesentlichen (mehr als 98 Gew.-% bezogen auf die enthaltenen Carbonsäuren oder deren Zinnsalze), bevorzugt ausschließlich Neodekansäure oder deren Zinnsalze als Carbonsäure bzw. deren Zinnsalz auf.

Bevorzugte erfindungsgemäß erhältliche Polyurethanschäume zeichnen sich dadurch aus, dass der Massenanteil an Neodekansäure bzw. deren Salzen, von 0,001 bis 5 Massen-%, bezogen auf das Gewicht des gesamten Schaums, vorzugsweise von 0,005 bis 1,5 Massen-% beträgt.

Die erfindungsgemäß erhältlichen Polyurethansysteme können z. B. Polyurethanschäume, insbesondere ein Polyurethanweichschaum, ein Polyurethanhartschaum, ein viscoelastischer Schaum, ein HR-Schaum, ein halbharter Polyurethanschaum, ein thermoverformbarer Polyurethanschaum oder ein Integralschaum sein. Die Bezeichnung Polyurethan ist hierbei als Oberbegriff für ein aus Di- bzw. Polyisocyanaten und Polyolen oder anderen gegenüber Isocyanat reaktiven Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyhamstoffe sind ausdrücklich mit eingeschlossen.

Die erfindungsgemäß erhältlichen Polyurethanschäume, bevorzugt die geschlossenzelligen Polyurethanschäume können z. B. als Kühlschrankisolierung, Dämmplatte, Sandwichelement, Rohrisolation, Sprühschaum, 1- & 1,5-Komponenten-Dosenschaum, Holzimitat, Modellschaum, Verpackungsschaum, Matratzen, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber verwendet werden. Unter geschlossenzelligen Polyurethanschäumen werden im Rahmen der vorliegenden Erfindung solche verstanden, die eine Luftdurchlässigkeit bzw. Porosität von größer 30 mm, bestimmt nach der in den Beispielen angegebenen Methode, aufweisen. Besonders bevorzugte erfindungsgemäße Polyurethansysteme, vorzugsweise Polyurethanschäume, sind wasserdicht im Sinne der oben genannten Definition.

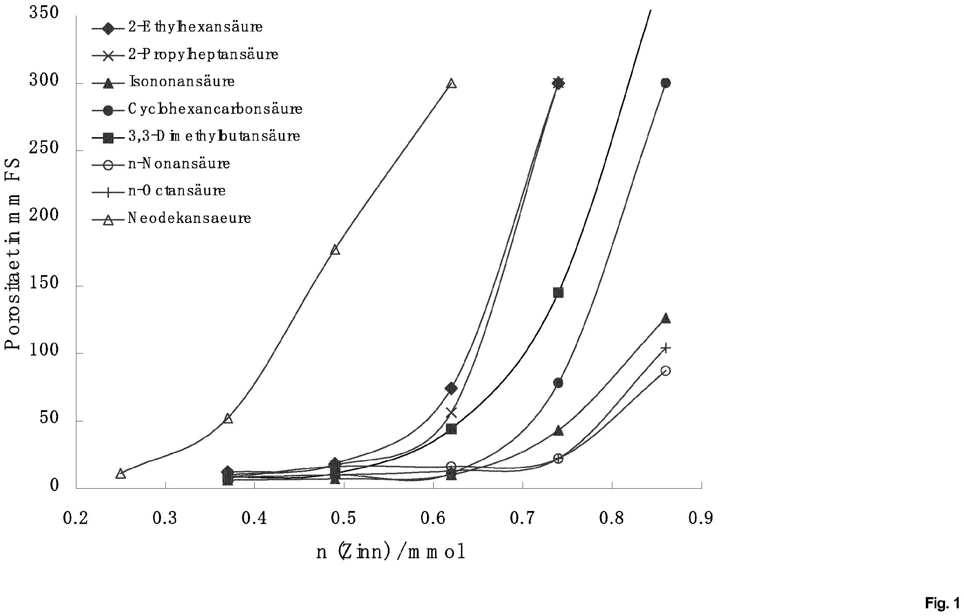

Die vorliegende Erfindung wird an Hand der Abbildung Fig. 1 näher erläutert, ohne dass der Gegenstand der Anmeldung darauf beschränkt sein soll.

Fig. 1 zeigt eine Graphik mit den Ergebnissen des Beispiels 41, bei der auf der X-Achse die Stoffmenge an Zinn im jeweiligen Katalysatorsystem in mmol und auf der Y-Achse die Porosität in mm Flüssigkeitssäure (FS) der erhaltenen Schäume angegeben ist.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele

### Beispiele 1 bis 41: Herstellung von Polyurethanschäumen

Zur Herstellung der Polyurethanschäume wurde folgende Rezeptur verwendet: 100 Gew.-Teile Polyetherol (Hydroxylzahl = 47 mg KOH/g, 11-12 % EO), 4 Gew.-Teile Wasser, 1 Gew.-Teil TEGOSTAB® BF 2370 (Silikonstabilisator der Evonik Industries AG), 0,1 Gew.-Teile eines tertiären Amins (TEGOAMIN® 33 (Aminkatalysator, Evonik Industries AG), 50,6 Gew.-Teile Toluoldiisocyanat T 80 (Index 110), sowie eine variable Menge an KOSMOS® 29 (Zinnoctoat, Evonik Industries AG) bzw. der zu untersuchenden Zinncarboxylate. Als nichterfindungsgemäße Verbindungen wurden mit 2-Ethylhexansäure, 2-Ethylbuttersäure, 2-Propylheptansäure und 3,5,5-Trimethylheptansaeure dem Zinnneodekanoat (Zinnsalz der Neodekansäure) möglichst strukturverwandte Moleküle zum Vergleich ausgewählt.

Bei der Verschäumung wurden 400 g Polyol eingesetzt, die anderen Formulierungsbestandteile wurden entsprechend umgerechnet. In Tabelle 1 sind die variablen Bestandteile der Rezepturen der Beispielschäume 1 bis 35 zusammengefasst.

Zur Verschäumung wurden das Polyol, Wasser, Amin, Zinnkatalysator und Silikonstabilisator unter Rühren gut vermischt. Nach Zugabe des Isocyanats wurde mit einem Rührer 7 Sek. bei 3000 U / min gerührt. Das erhaltene Gemisch wurde in einen mit Papier ausgekleideten Holzkasten (Grundfläche 27 cm x 27 cm) gegossen. Es entstand ein Schaumstoff, der den nachfolgend beschriebenen anwendungstechnischen Tests unterzogen wurde.

**Tabelle 1: Variable Bestandteile der Rezepturen der Beispielschäume 1 bis 41.**

| Beispiel Nr. | erfindungsgemäß | Salz^{[1]} | Katalysator [Gew.-Teile] |
|---|---|---|---|
| 1 | Nein | a) | 0,15 |
| 2 | Nein | a) | 0,20 |
| 3 | Nein | a) | 0,25 |
| 4 | Nein | a) | 0,30 |
| 5 | Nein | a) | 0,35 |
| 6 | Nein | b) | 0,17 |
| 7 | Nein | b) | 0,23 |
| 8 | Nein | b) | 0,285 |
| 9 | Nein | b) | 0,34 |
| 10 | Nein | b) | 0,40 |
| 11 | Nein | c) | 0,16 |
| 12 | Nein | c) | 0,215 |
| 13 | Nein | c) | 0,27 |
| 14 | Nein | c) | 0,33 |
| 15 | Nein | c) | 0,38 |
| 16 | Nein | d) | 0,30 |
| 17 | Nein | d) | 0,40 |
| 18 | Nein | d) | 0,50 |
| 19 | Nein | d) | 0,60 |
| 20 | Nein | d) | 0,70 |
| 21 | Nein | e) | 0,137 |
| 22 | Nein | e) | 0,18 |
| 23 | Nein | e) | 0,228 |
| 24 | Nein | e) | 0,274 |
| 25 | Nein | e) | 0,32 |
| 26 | Nein | f) | 0,128 |
| 27 | Nein | f) | 0,17 |
| 28 | Nein | f) | 0,213 |
| 29 | Nein | f) | 0,256 |
| 30 | Nein | f) | 0,299 |
| 31 | Nein | g) | 0,16 |
| 32 | Nein | g) | 0,21 |
| 33 | Nein | g) | 0,267 |
| 34 | Nein | g) | 0,32 |
| 35 | Nein | g) | 0,374 |
| 36 | Nein | h) | 0,113 |
| 37 | Nein | h) | 0,17 |
| 38 | Nein | h) | 0,228 |
| 39 | Nein | h) | 0,285 |
| 40 | Nein | h) | 0,34 |
| 41 | Nein | h) | 0,398 |

| | | | |
|---|---|---|---|
| ^{[1]} a) = Zinn (II)-Salz der 2-Ethylhexansäure b) = Zinn (II)-Salz der 2-Propylheptansäure c) = Zinn (II)-Salz der Isononansäure d) = Zinn (II)-Salz der n-Octansäure (50 gew.-%ig abgemischt in DPG) e) = Zinn (II)-Salz der Cyclohexancarbonsäure f) = Zinn (II)-Salz der 3,3-Dimethylbutansäure g) = Zinn (II)-Salz der n-Nonansäure h) = Zinn (II)-Salz der Neodekansaeure | | | |

### Physikalische Eigenschaften der Schäume

Die hergestellten Schäume wurden anhand folgender physikalischer Eigenschaften beurteilt:
a) Rücksacken des Schaumstoffes nach dem Ende der Steigphase (= Rückfall):
   Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen.
b) Schaumhöhe:
   Die Endhöhe des Schaumes wird dadurch bestimmt, dass der Rückfall bzw. das Nachsteigen von bzw. zu der Schaumhöhe nach dem Abblasen subtrahiert bzw. addiert wird.
c) Raumgewicht (RG):
   Die Bestimmung erfolgt wie in ASTM D 3574 - 08 unter Test A beschrieben durch Messung der Core Density.
d) Luftdurchlässigkeit / Porosität
e) Stauchhärte CLD, 40 %
f) Druckverformungsrest bei Kompression um 90 % für 22 h bei 70 °C
g) Rückprallelastizität (Ball rebound test)

Die Tests e) bis g) wurden gemäß ASTM D 1564-71 durchgeführt.

### Der Test d) wurde wie folgt durchgeführt:

### Methode:

Die Luftdurchlässigkeit / Porosität des Schaumes wurde durch eine Staudruckmessung am Schaumstoff ermittelt. Der gemessene Staudruck wurde in mm Alkoholsäule angegeben, wobei die niedrigeren Staudruckwerte den offeneren Schaum charakterisieren. Die Werte wurden im Bereich von 0 bis 300 mm gemessen.

### Apparatur:

Die Messapparatur wurde durch die hausinteme Stickstoffleitung gespeist, ist daher an diese angeschlossen und besteht aus folgenden miteinander verbundenen Teilen:
Reduzierventil mit Manometer,
Durchflussregelschraube,
Waschflasche,
Durchflussmessgerät,
T-Stück,
Auflagedüse,
Skaliertes Glasrohr, mit Alkohol gefüllt

Die Waschflasche ist nur obligatorisch, wenn die Apparatur nicht aus der internen Leitung, sondern direkt mit technischem Flaschengas gespeist wird.

Das Durchflussmessgerät ist vor der ersten Inbetriebnahme gemäß den Herstellerangaben unter Verwendung der mitgelieferten Eichkurven zu kalibrieren und bei 8 L/min = 480 L/h mit einer Markierung zu versehen.

Die Auflagedüse ist spezifiziert durch eine Kantenlänge von 100 x 100 mm, ein Gewicht zwischen 800 und 1000 g, lichte Weite der Ausströmöffnung von 5 mm, lichte Weite des unteren Auflageringes von 30 mm.

Die Messflüssigkeit (techn. Alkohol (Ethanol)) kann zur Anhebung des optischen Kontrastes angefärbt werden.

### Messvorgang:

Der Stickstoffvordruck wurde per Reduzierventil auf 1 bar eingestellt. Die Durchflussmenge wurde per Durchflussregelschraube auf die entsprechend 480 L/h eingeregelt. Die Flüssigkeitsmenge im skalierten Glasrohr wurde durch Alkohol auf ein Niveau gebracht, sodass keine Druckdifferenz aufgebaut und ablesbar ist. Für die eigentliche Vermessung des Prüfkörpers wurden fünf Einzelmessungen, vier an den vier Ecken und eine in der Mitte des Prüfkörpers durchgeführt. Hierzu wird an den Ecken die Auflagedüse kantenkongruent aufgelegt, die Mitte des Prüfkörpers wird geschätzt. Abgelesen wird, wenn sich ein konstanter Staudruck eingestellt hat.

### Auswertung:

Die obere Messgrenze der Methode liegt bei 300 mm Flüssigkeitssäule (FS). Für die Protokollierung sind drei verschiedene Fälle zu unterscheiden:
1. Alle fünf Werte liegen unter 300 mm FS. In diesem Fall wird das arithmetische Mittel gebildet und protokolliert.
2. Alle fünf Werte sind größer oder gleich 300 mm FS. In diesem Fall ist der Wert > 300 bzw. 300 zu protokollieren.
3. Von den fünf Messwerten sind a) Werte explizit bestimmbar, b) Werte größer oder gleich 300: es wird das arithmetische Mittel aus fünf Werten gebildet, wobei für die b)-Messwerte jeweils 300 eingesetzt wird. Die Anzahl der Werte größer oder gleich 300 wird mit Schrägstrich von dem Mittelwert getrennt ebenfalls protokolliert.

### Beispiel:

Vier Messwerte entsprechend 180,210,118 und 200 mm FS; ein Messwert > 300 mm FS ergibt (180 + 210 + 118 + 200 + 300) / 5. Protokolleintrag: 202/1.

Die Ergebnisse sind in Tabelle 2 zusammengefasst.

**Tabelle 2: Ergebnisse der Bestimmung der physikalischen Eigenschaften**

| Bsp. Nr. | Steigzeit [s] | Rückfall [cm] | Höhe [cm] | RG [kg/m³] | Porosität [mm] | CLD 40 % [kPa] | Druckverformung | Rückprall [cm] |
|---|---|---|---|---|---|---|---|---|
| 1 | 112 | -0,2 | 31,8 | 24,6 | 9 | 4,5 | 6 | 39 |
| 2 | 99 | -0,2 | 33,4 | 23,9 | 33 | 5,2 | 9 | 42 |
| 3 | 92 | + 0,5 | 34,1 | 23,2 | 201 | 5,9 | 34 | 44 |
| 4 | 84 | + 1,2 | 35,3 | 25,8 | 300 | 7,1 | 72 | 42 |
| 5 | 80 | + 1,7 | 36,2 | Schrumpf | - | - | - | - |
| 6 | 119 | + 0,1 | 30,1 | 24,9 | 10 | 4,0 | 5 | 41 |
| 7 | 104 | -0,2 | 30,9 | 25,0 | 17 | 4,5 | 8 | 41 |
| 8 | 95 | -0,1 | 32,0 | 24,3 | 56 | 4,9 | 12 | 44 |
| 9 | 90 | +0,4 | 32,7 | 23,0 | 300 | 5,3 | 74 | 41 |
| 10 | 86 | + 0,8 | - | Schrumpf | - | - | - | - |
| 11 | 131 | + 0,2 | 30,4 | 24,7 | 6 | 3,6 | 5 | 43 |
| 12 | 111 | ± 0,0 | 30,6 | 24,7 | 7 | 4,0 | 5 | 42 |
| 13 | 100 | -0,1 | 31,2 | 24,7 | 10 | 4,4 | 6 | 41 |
| 14 | 90 | ± 0,0 | 32,1 | 24,3 | 43 | 4,9 | 9 | 40 |
| 15 | 85 | + 0,3 | 32,8 | 23,6 | 126 | 5,2 | 70 | 36 |
| 16 | 126 | + 1,1 | 30,3 | 24,1 | 8 | 3,5 | 5 | 46 |
| 17 | 107 | -0,1 | 31,1 | 24,5 | 10 | 3,8 | 4 | 44 |
| 18 | 95 | -0,1 | 31,6 | 24,6 | 13 | 4,2 | 4 | 42 |
| 19 | 87 | -0,1 | 32,4 | 24,3 | 22 | 4,7 | 6 | 37 |
| 20 | 80 | + 0,1 | 32,7 | 24,0 | 104 | 5,0 | 7 | 40 |
| 21 | 120 | + 0,1 | 30,6 | 24,6 | 8 | 3,6 | 4 | 43 |
| 22 | 104 | -0,1 | 31,1 | 24,6 | 10 | 4,0 | 5 | 42 |
| 23 | 92 | -0,2 | 31,8 | 24,6 | 11 | 4,6 | 6 | 42 |
| 24 | 85 | ± 0,0 | 32,6 | 24,0 | 78 | 5,1 | 9 | 42 |
| 25 | 82 | + 0,6 | 33,5 | 22,8 | 300 | 5,6 | 81 | 46 |
| 26 | 111 | ± 0,0 | 30,8 | 24,7 | 8 | 3,9 | 4 | 43 |
| 27 | 95 | -0,2 | 31,8 | 24,7 | 11 | 4,3 | 5 | 42 |
| 28 | 86 | -0,2 | 32,7 | 24,2 | 44 | 4,8 | 7 | 32 |
| 29 | 79 | + 0,2 | 33,6 | 23,3 | 145 | 5,2 | 61 | 41 |
| 30 | 80 | + 0,6 | - | Schrumpf | - | - | - | - |
| 31 | 131 | + 0,2 | 31,0 | 26,1 | 8 | 2,9 | 6 | 43 |
| 32 | 115 | + 1,3 | 31,2 | 23,4 | 16 | 2,8 | 6 | 41 |
| 33 | 100 | -0,1 | 31,4 | 24,3 | 16 | 3,2 | 6 | 41 |
| 34 | 88 | -0,2 | 31,8 | 24,4 | 22 | 3,4 | 8 | 41 |
| 35 | 77 | + 0,1 | 32,4 | 23,9 | 87 | 3,8 | 25 | 37 |
| 36 | 117 | 0 | 29,7 | 25,6 | 11 | 3,2 | 7 | 41 |
| 37 | 112 | + 0,1 | 30,4 | 24,9 | 52 | 3,4 | 14 | 37 |
| 38 | 96 | + 0,3 | 31,3 | 24,0 | 177 | 4,0 | 81 | 21 |
| 39 | 93 | + 0,7 | 33,0 | 22,6 | 300 | 4,6 | 83 | 23 |
| 40 | 93 | + 1,1 | 34,4 | 22,5 | 300 | 6,1 | 80 | 29 |
| 41 | 85 | + 1,2 | 35,1 | Schrumpf | - | - | - | - |

Die Gewichtsteile der jeweiligen Katalysatoren wurden so berechnet, dass der Zinngehalt bei den zu vergleichenden Systemen äquimolar ist. Die Offenzelligkeit der Schaumstoffe verringert sich bei Steigerung der Einsatzmenge von z.B. Zinnisononat lediglich von 6 auf 126 mm Staudruck Wassersäule, bei n-Octansäure lediglich von 8 auf 104 mm. Im Vergleich dazu führen wesentlich geringere Mengen an Zinnneodekanoat bereits zu sehr geschlossenzelligen Schäumen (Beispiele 37 bis 40; mm > 50).

### Beispiele 42 bis 56: Herstellung von Polyurethanschäumen

Formulierung und Durchführung sind analog zu den Beispielen 1 - 41 vorgenommen worden.

Zur Herstellung der Polyurethanschäume wurde folgende Rezeptur verwendet: 100 Gew.-Teile Polyetherol (Hydroxylzahl = 47 mg KOH/g, 11-12 % EO), 4 Gew.-Teile Wasser, 1 Gew.-Teil TEGOSTAB® BF 2370 (Silikonstabilisator der Evonik Industries AG), 0,10 Gew.-Teile eines tertiären Amins, 50,6 Gew.-Teile Toluoldiisocyanat T 80 (Index 110), sowie eine variable Menge an KOSMOS® 29 (Zinnoctoat, Evonik Industries AG) bzw. der zu untersuchenden Zinncarboxylate. Als nichterfindungsgemäße Verbindungen wurden mit 2-Ethylhexansäure und 3,5,5-Trimethylheptansaeure dem Zinnneodekanoat (Zinnsalz der Neodekansäure) und Abmischungen des Zinnneodekanoats (in verschiedenen organischen Lösemitteln) möglichst strukturverwandte Moleküle zum Vergleich ausgewählt.

Bei der Verschäumung wurden 400 g Polyol eingesetzt, die anderen Formulierungsbestandteile wurden entsprechend umgerechnet. In Tabelle 3 sind die variablen Bestandteile der Rezepturen der Beispielschäume 42 bis 56 zusammengefasst.

Zur Verschäumung wurden das Polyol, Wasser, Amin, Zinnkatalysator und Silikonstabilisator unter Rühren gut vermischt. Nach Zugabe des Isocyanats wurde noch 7 Sek. bei 2500 U / min gerührt. Das erhaltene Gemisch wurde in einen mit Papier ausgekleideten Holzkasten (Grundfläche 27 cm x 27 cm) gegossen. Es entstand ein Schaumstoff, der den nachfolgend oder oben beschriebenen anwendungstechnischen Tests unterzogen wurde.

**Tabelle 3: Variable Bestandteile der Rezepturen der Beispielschäume 42 bis 55.**

| Beispiel Nr. | erfindungsgemäß | Salz^{[1]} | Katalysator [Gew.-Teile] |
|---|---|---|---|
| 42 | Nein | a) | 0,20 |
| 43 | Nein | b) | 0,20 |
| 44 | Nein | b) | 0,215 |
| 45 | Nein | b) | 0,30 |
| 46 | Nein | c) | 0,20 |
| 47 | Nein | c) | 0,228 |
| 48 | Ja | d) | 0,20 |
| 49 | Ja | d) | 0,228 |
| 50 | Ja | d) | 0,25 |
| 51 | Ja | d) | 0,28 |
| 52 | Ja | e) | 0,20 |
| 53 | Ja | e) | 0,228 |
| 54 | Ja | e) | 0,25 |
| 55 | Ja | e) | 0,28 |

| | | | |
|---|---|---|---|
| ^{[1]} a) = Zinn (II)-Salz der 2-Ethylhexansäure b) = Zinn (II)-Salz der Isononansäure c) = Zinn (II)-Salz der Neodekansaeure d) = Zinn (II)-Salz der Neodekansaeure (80 gew.-%ig abgemischt in Isopropylmyristat) e) = Zinn (II)-Salz der Neodekansaeure (80 gew.-%ig abgemischt in Dirpropylenglycol (DPG)) | | | |

### Physikalische Eigenschaften der Schäume

Die hergestellten Schäume wurden analog zu den Beispielschäumen 1-41 anhand ihrer physikalischen Eigenschaften beurteilt. Die Ergebnisse sind in Tabelle 4 zusammengefasst.

**Tabelle 4: Ergebnisse der Bestimmung der physikalischen Eigenschaften**

| Bsp. Nr. | Steigzeit [s] | Rückfall [cm] | Höhe [cm] | RG [kg/m³] | Porosität [mm] | CLD 40 % [kPa] | Druckverformung | Rückprall [cm] |
|---|---|---|---|---|---|---|---|---|
| 42 | 99 | -0,10 | 30,8 | 24,90 | 12 | 4,2 | 24 | 44 |
| 43 | 161 | + 2,70 | 32,0 | n.b. | 8 | n.b. | n.b. | n.b. |
| 44 | 118 | + 0,30 | 29,9 | 24,40 | 6 | 3,7 | 6 | 45 |
| 45 | 151 | -0,20 | 30,2 | 24,30 | 8 | 3,5 | 6 | 47 |
| 46 | 106 | + 0,30 | 30,2 | 24,80 | 98 | 4,6 | 77 | 27 |
| 47 | 101 | + 0,20 | 31,5 | 23,70 | 185 | 4,6 | 79 | 36 |
| 48 | 115 | + 0,10 | 30,4 | 24,10 | 27 | 3,9 | 26 | 43 |
| 49 | 108 | ± 0,0 | 30,8 | 24,90 | 106 | 4,6 | 73 | 37 |
| 50 | 104 | ± 0,0 | 30,4 | 24,40 | 97 | 4,5 | 75 | 33 |
| 51 | 100 | + 0,20 | 32,0 | 23,90 | 199 | 4,7 | 77 | 38 |
| 52 | 116 | -0,10 | 29,7 | 24,80 | 18 | 3,9 | 47 | 45 |
| 53 | 109 | ± 0,0 | 31,1 | 25,00 | 46 | 4,5 | 72 | 41 |
| 54 | 109 | + 0,10 | 30,9 | 24,90 | 227 | 4,8 | 71 | 32 |
| 55 | 103 | + 0,20 | 31,2 | 23,80 | 196 | 4,6 | 80 | 40 |

### Beispiele 56 bis 66: Herstellung von Polyurethanschäumen

Zur Herstellung der Polyurethanschäume wurde folgende Rezeptur verwendet: 100 Gew.-Teile Polyetherol (Hydroxylzahl = 47 mg KOH/g, 11-12 % EO), 4 Gew.-Teile Wasser, 2,50 Gew.-Teile Dichlormethan, 1 Gew.-Teil TEGOSTAB® BF 2370 (Silikonstabilisator der Evonik Industries AG), 0,12 Gew.-Teile eines tertiären Amins, 52,5 Gew.-Teile Toluoldiisocyanat T 80 (Index 112), sowie eine variable Menge an KOSMOS® 29 (Zinnoctoat, Evonik Industries AG) bzw. der zu untersuchenden Zinncarboxylate. Als nichterfindungsgemäße Verbindungen wurden mit 2-Ethylhexansäure und 3,5,5-Trimethylheptansaeure dem Zinnneodekanoat (Zinnsalz der Neodekansäure) und Abmischungen des Zinnneodekanoats (in organischen Lösemitteln) möglichst strukturverwandte Moleküle zum Vergleich ausgewählt.

Bei der Verschäumung wurden 400 g Polyol eingesetzt, die anderen Formulierungsbestandteile wurden entsprechend umgerechnet. In Tabelle 5 sind die variablen Bestandteile der Rezepturen der Beispielschäume 56 bis 66 zusammengefasst.

Zur Verschäumung wurden das Polyol, Wasser, Amin, Zinnkatalysator und Silikonstabilisator unter Rühren bei gut vermischt. Das Dichlormethan wurde zugegeben und mit einem Rührer 15 Sek. bei 1000 U / min gerührt. Nach Zugabe des Isocyanats wurde noch 7 Sek. bei 2500 U / min gerührt. Das erhaltene Gemisch wurde in einen mit Papier ausgekleideten Holzkasten (Grundfläche 27 cm x 27 cm) gegossen. Es entstand ein Schaumstoff, der den nachfolgend beschriebenen anwendungstechnischen Tests unterzogen wurde.

**Tabelle 5: Variable Bestandteile der Rezepturen der Beispielschäume 56 bis 66.**

| Beispiel Nr. | erfindungsgemäß | Salz^{[1]} | Katalysator [Gew.-Teile] |
|---|---|---|---|
| 56 | Nein | a) | 0,20 |
| 57 | Nein | b) | 0,20 |
| 58 | Nein | b) | 0,23 |
| 59 | Nein | c) | 0,20 |
| 60 | Nein | c) | 0,22 |
| 61 | Ja | d) | 0,30 |
| 62 | Ja | e) | 0,20 |
| 63 | Ja | e) | 0,24 |
| 64 | Ja | f) | 0,20 (0,20 TA DMEA) |
| 65 | Ja | f) | 0,20 (0,30 TA DMEA) |
| 66 | Ja | f) | 0,20 (0,20 TA DMEA / 0,04 BDE100) |

| | | | |
|---|---|---|---|
| ^{[1]} a) = Zinn (II)-Salz der 2-Ethylhexansäure b) = Zinn (II)-Salz der Isononansäure c) = Zinn (II)-Salz der Neodekansaeure d) = Zinn (II)-Salz der Neodekansaeure (75 gew.-%ig abgemischt in Isopropylmyristat) e) = Zinn (II)-Salz der Neodekansaeure (80 gew.-%ig abgemischt in Isopropylmyristat) f) = Zinn (II)-Salz der Neodekansaeure (80 gew.-%ig abgemischt in Dipropylenglycol (DPG)) TA DMEA = TEGOAMIN® DMEA (N,N-Dimethylethanolamine) | | | |

### Physikalische Eigenschaften der Schäume

Die hergestellten Schäume wurden analog zu den Beispielschäumen 1 - 41 anhand ihrer physikalischen Eigenschaften beurteilt. Die Ergebnisse sind in Tabelle 6 zusammengefasst.

**Tabelle 6: Ergebnisse der Bestimmung der physikalischen Eigenschaften**

| Bsp. Nr. | Steigzeit [s] | Rückfall [cm] | Höhe [cm] | RG [kg/m³] | Porosität [mm] | CLD 40 % [kPa] | Rückprall [cm] |
|---|---|---|---|---|---|---|---|
| 56 | 97 | -0,15 | 34,01 | 22,42 | 14 | 3,6 | 41 |
| 57 | 105 | -0,63 | 34,82 | 22,84 | 7 | 3,2 | 45 |
| 58 | 104 | -0,60 | 35,03 | 22,22 | 11 | 3,5 | 42 |
| 59 | 98 | -0,25 | 34,86 | 22,82 | 41 | 3,6 | 36 |
| 60 | 92 | -0,10 | 35,05 | 22,86 | 97 | 3,9 | 21 |
| 61 | 99 | -0,10 | 33,80 | 22,30 | 56 | 3,7 | 30 |
| 62 | 107 | -0,27 | 34,50 | 22,8 | 10 | 3,1 | 41 |
| 63 | 96 | -0,20 | 34,56 | 22,2 | 11 | 3,5 | 41 |
| 64 | 122 | -0,21 | 34,37 | 22,0 | 12 | 3,0 | 44 |
| 65 | 113 | -0,21 | 34,61 | 22,6 | 10 | 3,3 | 43 |
| 66 | 102 | -0,67 | 34,55 | 22,2 | 12 | 3,0 | 43 |

Ein Vergleich von Beispiel 56 (Zinnoctoat) mit den Beispielen 59 und 60 (Zinnneodecanoat pur) und Beispiel 63 (4:1 Abmischung) zeigt, dass das Zinnoctoat einen offenen Schaum liefert während Zinnneodecanoat pur einen geschlossenen Schaum bei ähnlicher Steigzeit liefert, obwohl im Vergleich zum Octoat die effektive Zinnmenge des Katalysators geringer ist. Durch Abmischung des Neodecanoats (4:1) lässt sich eine vergleichbare Steigzeit wie beim Zinnoctoat erzielen. Es ist außerdem zu erkennen, dass im Vergleich zu Beispiel 59 und 60 (pur) die Offenzelligkeit des Schaums, bei gleichzeitiger Herabsetzung der effektiven Zinnmenge verbessert wird.

### Bestimmung der Emissionen

Die Säure-Emission wird in Anlehnung an die Mercedes-Benz-Prüfvorschrift PB VWT 709 bestimmt.

Im Folgenden wird die Durchführung der Thermodesorption mit anschließender Gaschromatograhie/Massenspektrometrie-Kopplung (GC/MS) beschrieben.

### a) Messtechnik:

Die Thermodesorption wird mit einem Thermodesorber "TDS2" mit Probenwechsler der Fa. Gerstel, Mülheim, in Verbindung mit einem Hewlett Packard HP6890/HP5973 GC/MSD-System durchgeführt.

### b) Messbedingungen:

| | |
|---|---|
| Thermodesorption | Gerstel TDS 2 |
| Desorptionstemperatur | 90 °C |
| Desorptionsdauer | 30 min |
| Fluss | 60 ml/min |
| Transferline | 280 °C |
| Kryofokussierung | HP 6890 PTV |
| Liner | Glasverdampferrohr mit silanisierter Glaswolle |
| Temperatur | -150 °C |

| | |
|---|---|
| GC | Kapillar-GC HP 6890 |
| Injektor | PTV Split 1:50 |
| Temperaturprogramm | -150 °C; 3 min; 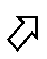 720 °C/min; 280 °C |
| Säule | 60 m ^{∗} 0,25 mm Optima 5 MS dF 0,5 µm |
| Fluss | 1 ml/min const. flow |
| Temperaturprogramm | 50 °C; 5 min; 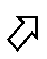 3 °C/min; 92 °C; 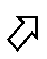 5 °C/min; 160 °C; 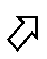 10° C/min; 280° C; 20 min |
| Detektor | HP MSD 5973 |
| Modus | Scan 29-350 amu 2.3 scans/sec |
| Auswertung | Auswertung des Totalionenstrom-Chromatogramms Berechnung des 2-Ethylhexansäure-Peaks als Toluoläquivalent |

### c) Kalibrierung

Zur Kalibrierung wird 1 µl eines Gemisches aus Toluol und Hexadecan in Pentan (je 0,6 mg/ml) auf ein gereinigtes, mit Tenax TA (mesh 35/60) gefülltes Adsorptionsröhrchen gegeben und vermessen (Desorption 5 min; 280 °C)

### d) Probenvorbereitung

10 mg Schaumstoff werden in drei Teilproben in ein Thermodesorptionsröhrchen gesteckt. Dabei wird darauf geachtet, dass der Schaum nicht komprimiert wird.

### e) Auswertung

Zur Quantifizierung der Säure-Emission wird der Peak, der mittels Massenspektrum als z.B. 2-Ethylhexansäure erkannt wird, über dessen Peakfläche mit dem Responsefaktor des Toluols aus der Kalibrierung als ppm-Toluoläquivalent bestimmt.

In Tabelle 3 sind die Ergebnisse der Säure-Emissionen ausgewählter Bespiele zusammengefasst.

**Tabelle 3: Ergebnisse der Emissionsbestimmungen**

| Nr. | erfindungsgemäß | Säure | Zinnkatalysator [Teile] | Gesamtemission [µg/g] | Säure-emission [µg/g] | Anteil an Gesamtemission [%] |
|---|---|---|---|---|---|---|
| 2 | nein | 2-Ethylhexan | 0,2 | 830 | 613 | 74 |
| 12 | nein | Isononan | 0,215 | 770 | 512 | 66 |
| 7 | nein | 2-Propylheptan | 0,23 | 1190 | 805 | 68 |
| 17^{[2]} | nein | n-Octan | 0,2 | 500 | 202 | 40 |
| 32 | nein | n-Nonan | 0,215 | 380 | 119 | 31 |
| 37 | nein | Neodekan | 0,228 | 690 | 400 | 58 |

| | | | | | | |
|---|---|---|---|---|---|---|
| ^{[2]} ohne Abmischung in DPG | | | | | | |

Aus den Ergebnissen geht eindeutig hervor, dass die Emission durch Einsatz von Säuren die keine 2-Ethyl- oder 2-Propyl-Verzweigung aufweisen, wie z. B. Neodekan, Isononansäure, n-Octansäure oder n-Nonansäure deutlich verringert wird.

### Bestimmung des Einflusses des Katalysatorgehalts (Zinngehalts) auf die Porosität der Schäume

Es wurden Schäume wie in Beispiel 1 bis 41 angegeben hergestellt, wobei die Konzentration an Katalysatorsystem variiert wurde. Die Schäume wurden unter Verwendung von Zinnsalzen von 2-Ethylhexansäure, 3,3-Dimethylbuttersäure, 2-Propylheptansäure, Cyclohexancarbonsäure, Isononansaeure, Neodekansaeure, n-Nonansaeure und n-Octansäure hergestellt. Die erhaltenen Schäume wurden auf ihre Porosität hin untersucht. Die Ergebnisse dieser Untersuchungen sind in Fig. 1 dargestellt.

Es ist leicht zu erkennen, dass insbesondere bei Verwendung von Katalysatorsystemen, die auf n-Octansäuresalz und Isononansäuresalz basieren, erst bei deutlich höheren Konzentrationen eine Verminderung der Porosität zu beobachten ist. Die entsprechenden Katalysatorsysteme benötigen daher deutlich höhere Einsatzmengen im Vergleich zu Zinn-Neodekansäuresalzen .bei der Herstellung von sowohl offen-, als auch geschlossenzelligen Schäumen. Während von 2-Ethylhexansaeurezinn(II)salzen bei der wie zuvor verwendeten Formulierung mindestens 0,37 mmol des Zinnkatalysators eingesetzt werden müssen um einen offenzelligen Schaum zu erlangen, kann die Konzentration bei Verwendung eines Zinn(II)neodekanoats um 32% auf 0,25 mmol reduziert werden. Damit ist bei der Verwendung des erfindungsgemäßen Zinnneodekanoats eine deutliche Reduktion des benötigten Zinnkatalysators möglich, wodurch Zinn ärmere Polyurethanysteme, insbesondere Polyurethanschäume erhältlich sind.

### Bestimmung der Wasserdurchlässigkeit

Die Wasserdurchlässigkeit/Wasserdichtheit wurde in Anlehnung an die GM-Prüfvorschrift (General Motors Engineering Standard GM 6086M) bestimmt, wie in US 6,747,068 B2, Beispiel 61 B angegeben.

Tabelle 4 gibt die Formulierungen der im Test verwendeten Schäume und die Ergebnisse der Wasserdurchlässigkeit wieder.

**Tabelle 4: Ergebnisse der Wasserdurchlässigkeitsbestimmung**

| Nr. | 42 | 43 | 44 | 45 | 46 | 47 |
|---|---|---|---|---|---|---|
| | [pphp] | [pphp] | [pphp] | [pphp] | [pphp] | [pphp] |
| Polyol^{[1]} | 100 | 100 | 100 | 100 | 100 | 100 |
| B 8870 | 2 | 2 | 2 | 2 | 2 | 2 |
| Wasser | 3 | 3 | 3 | 3 | 3 | 3 |
| TA 33^{[2]} | 0.2 | 0.2 | 0.2 | 0.2 | 0.2 | 0.2 |
| K 29^{[3]} | 0.09 | 0.11 | 0.11 | - | - | - |
| Zinnneodekanoat | - | - | - | 0.09 | 0.11 | 0.11 |
| TDI | 39.6 | 39.6 | 39.6 | 39.6 | 39.6 | 39.6 |
| index | 105 | 105 | 105 | 105 | 105 | 105 |
| Porositaet [mm Saeule] | 3 | 15 | 14 | 12 | 31 | 38 |
| Wasserlevel [cm] | 25 | 25 | 76 | 25 | 25 | 25 |
| Penetrationszeit [min] | 73 | 97 | 46 | 94 | 120 | 93 |
| bestanden | nein | ja | nein | ja | ja | ja |

| | | | | | | |
|---|---|---|---|---|---|---|
| ^{[1]} Polyethertriol der OH-Zahl 56, M_{w} = 3100 g/mol, EO/PO based ^{[2]}TEGOSTAB® B8870 (Silikonstabilisator der Evonik Industries AG zur Herstellung hydrophober Schaeume) ^{[3]}TEGOAMIN® 33 (Aminkatalysator, Evonik Industries AG) ^{[4]} KOSMOS® 29 (Zinnoktoat, Evonik Industries AG) | | | | | | |

Tabelle 4 kann entnommen werden, dass die Schäume, die mit Hilfe des Zinnneodekanoats hergestellt wurden, geschlossenzelliger sind und es dadurch ermöglicht wurde Dichtschäume herzustellen, die bezüglich ihrer Wasserdurchlässigkeit optimiert wurden und den GM-Test problemlos bestehen. Zudem lässt sich bei gleicher Einsatzmenge an Katalysator die Zinnmenge reduzieren, da Zinnneodekanoat trotz niedrigeren Zinngehalts katalytisch aktiver ist als Zinnoktoat.

## Patentansprüche

1. Verfahren zur Herstellung von Polyurethanschäumen, **dadurch gekennzeichnet, dass** ein Katalysatorsystem, enthaltend ein Zinnsalz der Neodekansäure und ein oder mehrere organische Lösungsmittel, eingesetzt wird.

2. Verfahren nach Anspruch 1, **dadurch gekennzeichnet, dass** das Katalysatorsystem ausschließlich Zinnsalz der Neodekansäure und keine weiteren Zinnsalze oder Verbindungen enthält.

3. Verfahren nach Anspruch 1 oder 2, **dadurch gekennzeichnet, dass** das Katalysatorsystem der Reaktionsmischung vor oder während der Reaktion zugegeben wird.

4. Verfahren nach mindestens einem der Ansprüche 1 bis 3, **dadurch gekennzeichnet, dass** die Menge an Zinnneodekanoat von 0,04 bis 1 pphp, bevorzugt 0,08 bis 0,9 pphp und besonders bevorzugt von 0,09 bis 0,7 pphp beträgt, wobei pphp gleich der Gewichtsteile bezogen auf 100 Gewichtsteile Polyol ist.

## Claims

1. Process for producing polyurethane foams, **characterized in that** a catalyst system comprising a tin salt of neodecanoic acid and one or more organic solvents is used.

2. Process according to Claim 1, **characterized in that** the catalyst system comprises exclusively tin salt of neodecanoic acid and no further tin salts or compounds.

3. Process according to Claim 1 or 2, **characterized in that** the catalyst system is added to the reaction mixture before or during the reaction.

4. Process according to at least one of Claims 1 to 3, **characterized in that** the amount of tin neodecanoate is from 0.04 to 1 pphp, preferably 0.08 to 0.9 pphp and more preferably from 0.09 to 0.7 pphp, where pphp = parts by weight based on 100 parts by weight of polyol.

## Revendications

1. Procédé pour la préparation de mousses de polyuréthane, **caractérisé en ce qu'**un système de catalyseur est utilisé, contenant un sel d'étain de l'acide néodécanoïque et un ou plusieurs solvants organiques.

2. Procédé selon la revendication 1, **caractérisé en ce que** le système de catalyseur contient uniquement le sel d'étain de l'acide néodécanoïque et aucun autre sel d'étain ou composé.

3. Procédé selon la revendication 1 ou 2, **caractérisé en ce que** le système de catalyseur est ajouté au mélange réactionnel avant ou pendant la réaction.

4. Procédé selon au moins l'une des revendications 1 à 3, **caractérisé en ce que** la quantité de néodécanoate d'étain est de 0,04 à 1 pphp, préférablement de 0,08 à 0,9 pphp et particulièrement préférablement de 0,09 à 0,7 pphp, pphp représentant des parties en poids par rapport à 100 parties en poids de polyol.
